# FASCICULE DE BREVET EUROPEEN

(11) **EP 2 509 801 B1**
(45) Date de publication et mention de la délivrance du brevet: **28.08.2013**
(21) Numéro de dépôt: 10807328.9
(22) Date de dépôt: 09.12.2010
(51) Int. Cl.: B60C 9/18, B60C 9/22, B60C 9/20

(54) **PNEUMATIQUE POUR VEHICULES LOURDS COMPORTANT UNE COUCHE D'ELEMENTS DE RENFORCEMENT CIRCONFERENTIELS CONSTITUEE D'UNE PARTIE CENTRALE ET DE DEUX PARTIES AXIALEMENT EXTERIEURES**
REIFEN FÜR SCHWERLASTFAHRZEUGE MIT EINER SCHICHT AUS UMLAUFENDEN VERSTÄRKUNGSELEMENTEN AUS EINEM ZENTRALEN TEIL UND ZWEI AUSSERAXIALEN TEILEN
TYRE FOR HEAVY VEHICLES, COMPRISING A LAYER OF CIRCUMFERENTIAL REINFORCING ELEMENTS CONSISTING OF A CENTRAL PART AND TWO AXIALLY EXTERNAL PARTS

(30) Priorité: 10.12.2009 FR 0958835
(43) Date de publication de la demande: 17.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VILLER, Jean-Marc, F-63200 Riom (FR)
(74) Mandataire: Le Cam, Stéphane Georges Elie
(86) Numéro de dépôt international: PCT/EP2010/069275
(87) Numéro de publication internationale: WO 2011/070111

(56) Documents cités:
- EP-A1- 1 526 003
- WO-A1-99/24269
- US-A- 3 990 493

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 8°, - 8° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches d'éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, il a été proposé d'associer aux couches de sommet de travail à angle au moins une couche additionnelle d'éléments de renforcement sensiblement parallèles à la direction circonférentielle. La demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentielles est usuellement constituées par au moins un câble métallique enroulé pour former une spire dont l'angle de pose par rapport à la direction circonférentielle est inférieur à 8°.

Les résultats obtenus en termes d'endurance et d'usure lors de roulages prolongés sur routes à grande vitesse sont satisfaisants. Toutefois, il apparaît que les mêmes véhicules sont amenés à emprunter des routes ou des pistes non bitumés, par exemple pour arriver jusqu'à un chantier ou rejoindre une zone de déchargement. Les roulages sur ces zones se font à faibles vitesses par contre les pneumatiques, notamment leurs bandes de roulements, sont soumis à des agressions du fait par exemple de la présence de cailloux qui pénalisent lourdement les performances en termes d'usure des pneumatiques.

Un but de l'invention est de fournir des pneumatiques pour véhicules "Poids-Lourds", dont les performances d'endurance et d'usure sont conservées pour des usages routiers et dont les performances d'usure sont améliorées pour des usages sur sol non bitumé

Ce but est atteint selon l'invention par un pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement métalliques circonférentiels, ladite couche d'éléments de renforcement circonférentiels étant constituée d'au moins une partie centrale et deux parties axialement extérieures, les éléments de renforcement de la partie centrale de ladite au moins une couche d'éléments de renforcement circonférentiels étant des éléments de renforcement coupés de manière à former des tronçons, la longueur des tronçons étant inférieure à 550 mm, la distance entre les extrémités de deux tronçons consécutifs étant supérieure à 25 mm, la longueur des tronçons étant comprise entre 1.1 et 13 fois la distance entre les extrémités de deux tronçons consécutifs et les éléments de renforcement des deux parties axialement extérieures étant continus.

Le pneumatique ainsi défini selon l'invention conserve des propriétés satisfaisantes en roulage à grandes vitesses sur routes et présente en outre des performances en termes de résistance à l'usure et plus précisément en termes de résistances aux agressions nettement améliorés par rapport à des pneumatiques connus.

Les inventeurs ont en effet su mettre en évidence que les agressions qui interviennent sur des terrains non bituminés concernent essentiellement la partie centrale de la bande de roulement du pneumatique, celle-ci étant semble-t-il toujours la plus exposée.

Le pneumatique tel que défini selon l'invention conduit à un assouplissement selon la direction radiale de la partie axialement centrale du pneumatique du fait notamment de la moindre rigidité circonférentielle de cette zone centrale du pneumatique liée à la présence d'éléments de renforcements circonférentiels coupés. Cet assouplissement conduit, au vu des résultats obtenus, à une absorption des agressions de la bande de roulement de la part des obstacles tels que des cailloux présent sur les sols sur lesquels circulent le véhicule.

Les inventeurs ont encore su mettre en évidence que la diminution de la rigidité de la zone centrale du pneumatique permet de modifier la forme de l'aire de contact du pneumatique avec le sol et ainsi améliorer encore les performances en termes d'usure sur sol bituminé. En effet, l'armature de sommet selon l'invention favorise une empreinte au sol quasi rectangulaire en limitant l'aspect concave selon la direction axiale de ladite empreinte.

Une variante avantageuse de réalisation de l'invention prévoit que la longueur des tronçons est inférieure à 300 mm et que la longueur des tronçons est inférieure à 6.5 fois la distance entre les extrémités de deux tronçons consécutifs.

Avantageusement encore selon l'invention, la longueur des tronçons est inférieure à 260 mm et la longueur des tronçons est inférieure à 3.5 fois la distance entre les extrémités de deux tronçons consécutifs.

Avantageusement encore, la distance entre les extrémités de deux tronçons est supérieure à 35 mm.

Selon un mode de réalisation préféré de l'invention, notamment pour assurer une rigidité circonférentielle minimum, la longueur des tronçons est supérieure à 95 mm.

Pour la même raison, de préférence également, la distance entre les extrémités de deux tronçons consécutifs est inférieure à 175 mm.

La rigidité des éléments de renforcement de la partie centrale doit notamment être suffisante pour assurer un frettage satisfaisant du pneumatique au niveau de cette partie centrale pour supporter les contraintes imposées notamment lors du gonflage ou des roulages à grandes vitesses et limiter l'expansion circonférentielle de l'armature de sommet.

Ces valeurs favorisent encore une bonne cohésion de l'ensemble de l'armature de sommet du pneumatique notamment dans sa partie centrale. Ces valeurs favorisent également une contribution de la couche d'éléments de renforcement circonférentiels contre les agressions de type perforation. En effet, ces valeurs favorisent un compromis entre l'assouplissement du sommet qui autorise une absorption des agressions de la bande de roulement et un rôle de protection en cas de perforation de la dite bande de roulement.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une variante de réalisation préférée de l'invention, la largeur axiale de la partie centrale de la couche d'éléments de renforcement circonférentiels est supérieure à 0.15xS et inférieur à 0.5xS.

Avantageusement encore selon l'invention, la largeur axiale de chacune des parties axialement extérieures de la couche d'éléments de renforcement circonférentiels est inférieure à 0.45xS.

Selon une variante de réalisation de l'invention, des zones de transition sont avantageusement prévues entre la partie centrale et les parties axialement extérieures telles que lesdites zones de transition comportent au plus un élément de renforcement métallique, la largeur, mesurée selon la direction axiale, desdites zones de transition étant au moins égale à 1.5 mm.

De telles zones de transition vont notamment permettre de limiter l'apparition de zones de surtension dans le câble axialement le plus intérieur des parties axialement extérieures de la couche d'éléments de renforcement circonférentiels dans les zones en regard des extrémités des tronçons axialement les plus extérieurs de la partie centrale.

De préférence, selon ce mode de réalisation, la largeur, mesurée selon la direction axiale, desdites zones de transition est au plus égale à 7 mm.

Selon ce mode de réalisation, lorsque les zones de transition comportent un élément de renforcement métallique, celui-ci présente un angle avec la direction circonférentielle avantageusement compris entre 0.2 et 4°.

Avantageusement encore selon ce mode de réalisation, notamment lorsque le pneumatique est destiné à équiper l'essieu directeur d'un véhicule et dont la bande de roulement comporte au moins au moins un rib circonférentiel, les bords latéraux de ces zones de transition sont distants des extrémités axiales, au niveau de la surface de roulement, dudit rib d'une distance mesurée selon la direction axiale d'au moins 4 mm. Lorsqu'un bord d'un rib est arrondi, les extrémités axiales sont définies par l'intersection de la pente du sillon formé par le rib avec la tangente à la face supérieure du rib.

Selon d'autres variantes de l'invention, des zones de transition sont avantageusement prévues entre la partie centrale et les parties axialement extérieures telles que lesdites zones de transition présentent des rigidités circonférentielles intermédiaires entre celles de la partie centrale et des parties axialement extérieures. Ces zones de transition présentent de préférence une petite largeur axiale et assure une transition progressive entre les rigidités circonférentielles de la partie centrale et des parties axialement extérieures. La largeur de ladite zone de transition est avantageusement comprise entre 1.25 et 3.75 fois le pas de pose des éléments de renforcement circonférentiels dans les parties axialement extérieures.

Au sens de l'invention, le pas dans une partie de la couche d'éléments de renforcement circonférentiels est la distance entre deux éléments de renforcement consécutifs. Elle est mesurée entre les axes longitudinaux desdits éléments de renforcement selon une direction perpendiculaire à au moins l'un desdits axes longitudinaux. Elle est donc mesurée selon une direction sensiblement axiale.

Le gradient de rigidité depuis les parties axialement extérieures jusqu'à la partie centrale est avantageusement obtenu avec des zones de transition constituées d'éléments de renforcement circonférentiels coupés de manière à former des tronçons dont la longueur est supérieure à celle des tronçons de la partie centrale et/ou avec une distance entre les extrémités de deux tronçons consécutifs qui est inférieure à celle entre deux tronçons de la partie centrale.

Avantageusement encore, selon un premier mode de réalisation, la longueur circonférentielle des tronçons diminue depuis le bord axialement extérieur d'une zone de transition vers son bord axialement intérieur.

Selon un deuxième mode de réalisation, la distance entre les extrémités de deux tronçons consécutifs augmente depuis le bord axialement extérieur d'une zone de transition vers son bord axialement intérieur.

Selon un troisième mode de réalisation de l'invention, une diminution de la longueur circonférentielle des tronçons est combinée à une augmentation de la distance entre les extrémités de deux tronçons consécutifs, depuis le bord axialement extérieur d'une zone de transition vers son bord axialement intérieur.

Selon une variante de réalisation de l'invention, il est prévu une diminution de la longueur circonférentielle des tronçons et/ou une augmentation de la distance entre les extrémités de deux tronçons consécutifs depuis les bords de la partie centrale vers le centre de celle-ci.

L'invention prévoit encore l'association de deux zones de transition successives prévues entre la partie centrale et les parties axialement extérieures, la première, adjacente à une partie axialement extérieure, comportant au plus un élément de renforcement métallique telle que décrite précédemment et la seconde, adjacente à la partie centrale, présentant des rigidités circonférentielles intermédiaires entre celles de la partie centrale et des parties axialement extérieures, notamment obtenues par une diminution de la longueur circonférentielle des tronçons et/ou une augmentation de la distance entre les extrémités de deux tronçons consécutifs depuis le bord axialement extérieur de ladite seconde zone de transition vers son bord axialement intérieur.

D'autres variantes prévoient encore que les éléments de renforcement circonférentiels soient mis en place avec un pas différent dans la partie centrale et dans les parties axialement extérieures. Pour favoriser une rigidité circonférentielle inférieure dans la partie centrale de la couche d'éléments de renforcement circonférentiels, le pas est avantageusement plus important dans ladite partie centrale. Sa valeur n'excède avantageusement pas 1.5 fois la valeur du pas dans les parties axialement extérieures, et de préférence encore 1.25 fois la valeur du pas dans les parties axialement extérieures.

Avantageusement encore, lorsque le pas varie entre les parties axialement extérieures et la partie centrale et que la couche d'éléments de renforcement circonférentielles comportent des zones de transition, le pas de pose des éléments de renforcement circonférentiels dans la zone de transition est à une valeur comprise entre celle des parties axialement extérieures et celle de la partie centrale.

Un mode de réalisation préférée de l'invention prévoit que deux éléments de renforcement circonférentiels consécutifs, ou axialement adjacents, de la partie centrale, et éventuellement des zones de transition, qui sont constituées d'éléments de renforcement coupés formant des tronçons, ne présentent pas de zones de coupures axialement en regard l'une de l'autre. Plus précisément, les zones de coupures entre tronçons ne sont de préférence pas axialement adjacentes et sont donc décalées circonférentiellement.

Avantageusement selon ce mode de réalisation, les extrémités de deux tronçons adjacents sont séparées l'une de l'autre selon la direction longitudinale d'une distance supérieure à 0.1 fois la longueur du tronçon dont la longueur mesurée selon la direction longitudinale est la plus petite.

L'invention prévoit encore avantageusement qu'au moins une couche constituant l'architecture sommet est présente radialement sous le « rib », ou sculpture d'orientation principale longitudinale, axialement le plus à l'extérieur. Cette réalisation permet comme énoncé précédemment de renforcer la rigidité de ladite sculpture. Avantageusement encore, la couche d'éléments de renforcement circonférentiels est présente radialement sous le « rib », ou sculpture d'orientation principale longitudinale, axialement le plus à l'extérieur.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

De préférence encore, la couche de sommet de travail axialement la plus large est radialement à l'intérieur des autres couches de sommet de travail.

Selon un mode de réalisation préférée de l'invention, la couche d'éléments de renforcement circonférentiels est radialement disposée entre deux couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

Au sens de l'invention, des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Selon une première variante de l'invention, les éléments de renforcement circonférentiel de la partie centrale d'au moins une couche d'éléments de renforcement circonférentiels sont des éléments de renforcement métalliques inextensibles. Cette variante de réalisation de l'invention est particulièrement intéressante d'un point de vue économique, ce type d'éléments de renforcement étant peu onéreux.

Selon une autre variante de l'invention, les éléments de renforcement circonférentiel de la partie centrale d'au moins une couche d'éléments de renforcement circonférentiels sont des éléments de renforcement métalliques élastiques. Une telle variante de réalisation de l'invention peut présenter l'avantage de simplifier la réalisation de la couche d'éléments de renforcement circonférentiels, les mêmes éléments de renforcement pouvant être utilisé pour les trois parties axiales de ladite couche d'éléments de renforcement circonférentiels. Un système pour couper les éléments de renforcement n'étant par exemple rendu opérationnel que pour la partie centrale lors de la pose des éléments de renforcement circonférentiels.

Selon un mode de réalisation avantageux de l'invention, au moins les éléments de renforcement des deux parties axialement extérieures d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, au moins les éléments de renforcement des deux parties axialement extérieures d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins les deux parties axialement extérieures d'au moins une couche d'éléments de renforcement circonférentiels permet notamment de conserver des rigidités de la couche satisfaisante y compris après les étapes de conformation et de cuisson dans des procédés de fabrication usuels.

Les éléments métalliques sont préférentiellement des câbles d'acier.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 5 qui représentent :
- figure1, une vue méridienne d'un schéma d'un pneumatique selon de l'invention,
- figure 2, une représentation schématique d'une couche d'éléments de renforcement circonférentiels du pneumatique de la figure 1,
- figure 3, une représentation schématique d'une couche d'éléments de renforcement circonférentiels selon un deuxième mode de réalisation de l'invention,
- figure 4, une représentation schématique d'une couche d'éléments de renforcement circonférentiels selon un troisième mode de réalisation de l'invention,
- figure 5, une vue méridienne d'un schéma d'un pneumatique selon une variante de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

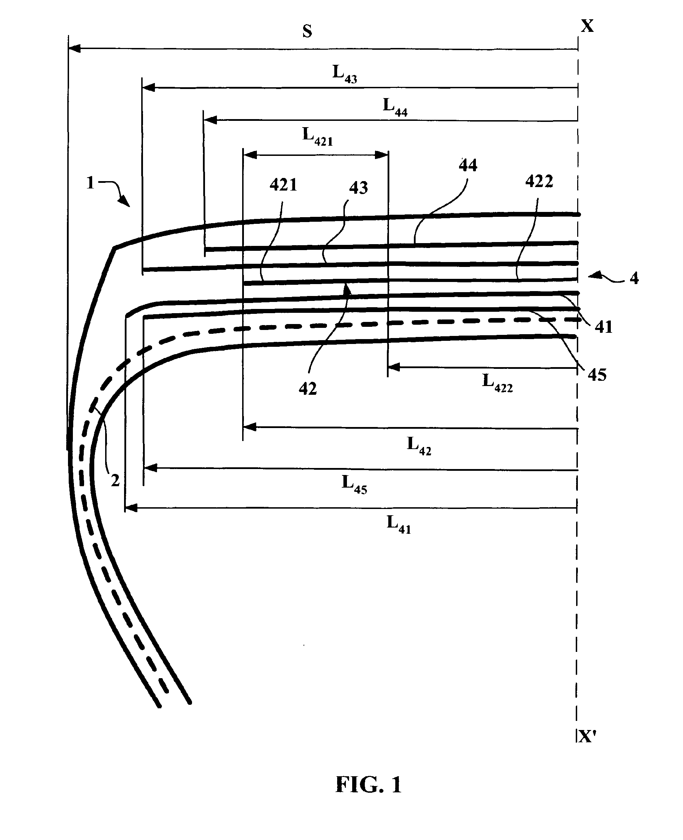

Sur la figure 1, le pneumatique 1, de dimension 455/45 R 22.5, a un rapport de forme H/S égal à 0,45, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure 1. L'armature de carcasse est formée d'une seule couche de câbles métalliques. Cette armature de carcasse 2 est frettée par une armature de sommet 4, formée radialement de l'intérieur à l'extérieur :
- d'une couche d'éléments de renforcement 45, dite de triangulation, formée de câbles métalliques inextensibles 9.28 non frettés, continus sur toute la largeur de la nappe, orientés d'un angle égal à 50°,
- d'une première couche de travail 41 formée de câbles métalliques inextensibles 11.35 non frettés, continus sur toute la largeur de la nappe, orientés d'un angle égal à 18°,
- d'une couche d'éléments de renforcement circonférentiels 42 formée de câbles métalliques en acier 21x28, de type "bi-module", constituée de trois parties dont deux parties axialement extérieures 421 et une partie centrale 422,
- d'une seconde couche de travail 43 formée de câbles métalliques inextensibles 11.35 non frettés, continus sur toute la largeur de la nappe, orientés d'un angle égal à 18° et croisés aux câbles métalliques de la couche 41,
- d'une couche de protection 44 formées de câbles métalliques élastiques 18x23, orientés d'un angle égal à 18°, dans le même sens que les éléments de renforcement de la couche de travail 43.

L'armature de sommet est elle-même coiffée d'une bande de roulement 6.

La largeur axiale maximale S du pneumatique est égale à 458 mm.

La largeur axiale L₄₅ de la couche de triangulation 45 est égale à 382 mm.

La largeur axiale L₄₁ de la première couche de travail 41 est égale à 404 mm.

La largeur axiale L₄₃ de la deuxième couche de travail 43 est égale à 380 mm. La différence entre les largeurs L₄₁ et L₄₃ est égale à 24 mm.

Quant à la largeur axiale globale L₄₂ de la couche d'éléments de renforcement circonférentiels 42, elle est égale à 304 mm. Les parties axialement extérieures 421 présentent une largeur L₄₂₁ égale à 61 mm et donc inférieure à 45% de S.

La largeur de la partie centrale L₄₂₂ est égale à 182 mm.

La dernière nappe de sommet 44, dite de protection, a une largeur L₄₄ égale à 338 mm.

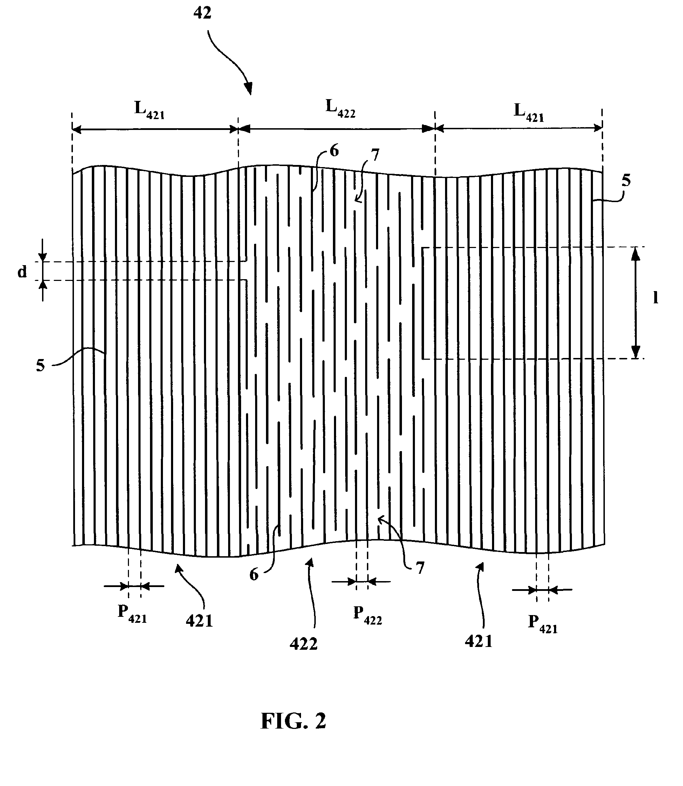

La figure 2 illustre un premier mode de réalisation d'une couche d'éléments de renforcement circonférentiels 42 selon l'invention, correspondant à la figure 1. Comme énoncée précédemment cette couche 42 est constituée d'une partie centrale 421 et deux parties axialement extérieures 421.

Les éléments de renforcement circonférentiels 5 sont déposés avec un pas P constant égal à 2.3 mm sur toute la largeur axiale de la couche d'éléments de renforcement circonférentiels 42.

Dans la partie centrale, les éléments de renforcement circonférentiels sont coupés pour former des tronçons 6, présentant une longueur 1 égale à 101 mm. Deux tronçons sont séparés par un intervalle 7 dont la distance d mesurée entre les extrémités de deux tronçons 6 circonférentiellement consécutifs est égale à 65 mm.

La couche 42 ainsi réalisée permet d'obtenir une rigidité circonférentielle inférieure dans la partie centrale 422 par rapport à celles des parties axialement extérieures 421.

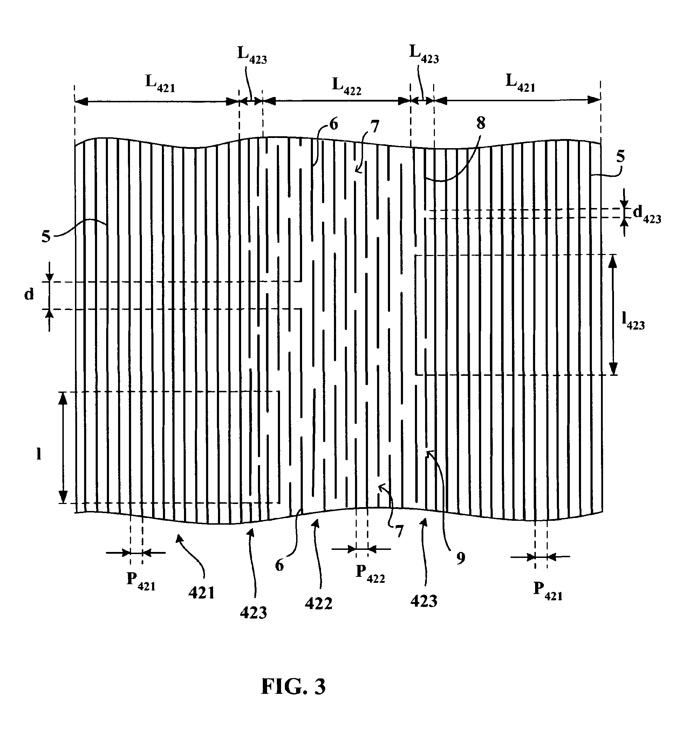

La figure 3 illustre un deuxième mode de réalisation d'une couche d'éléments de renforcement circonférentiels 42 selon l'invention. En plus de la partie centrale 422 et des parties axialement extérieures 421, la couche 42 comporte deux zones intermédiaires 423 axialement situées entre la partie centrale 422 et chacune des parties axialement extérieures 421.

La largeur axiale L₄₂₃ est égale à 4.5 mm. La largeur axiale de la partie centrale L₄₂₂ est égale à 173 mm et les largeurs axiales L₄₂₁ des parties axialement extérieures 421 sont égales à 61 mm.

La longueur des tronçons 6 et la distance des intervalles 7 de la partie centrale 422 sont identiques à celles de la figure 2.

Les tronçons 8 des zones intermédiaires 423 présentent une longueur l₄₂₃ égale à 132 mm et deux tronçons 8 sont séparés par un intervalle 9 dont la distance d₄₂₃ mesurée entre les extrémités de deux tronçons 8 circonférentiellement consécutifs est égale à 35 mm.

Ces valeurs montrent que les tronçons 8 des zones intermédiaires 423 sont plus longs que les tronçons 6 de la partie centrale 422 et en outre séparés par des intervalles dont la distance est inférieure à celle des intervalles de la partie centrale 422. La rigidité circonférentielle dans ces zones intermédiaires est ainsi supérieure à celle de la partie centrale. On obtient ainsi une variation plus progressive de la rigidité circonférentielle selon la direction axiale de la couche d'éléments de renforcement circonférentiels 42.

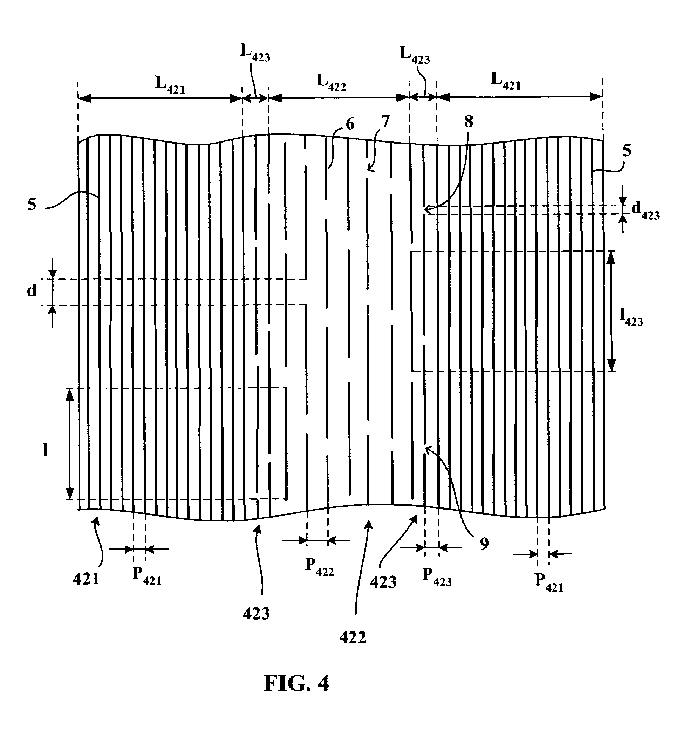

La figure 4 illustre un troisième mode de réalisation d'une couche d'éléments de renforcement circonférentiels 42 selon l'invention. Comme dans le cas de la figure 3, elle comporte deux zones intermédiaires 423 axialement situées entre la partie centrale 422 et chacune des parties axialement extérieures 421.

Les largeurs axiales L₄₂₃, L₄₂₂, et L₄₂₁ sont identiques à celles de la figure 3.

La longueur des tronçons 6 et la distance des intervalles 7 de la partie centrale 422 sont identiques à celles des figures 2 et 3.

La longueur des tronçons 8 et la distance des intervalles 9 des zones intermédiaires 423 sont identiques à celles de la figure 3.

Le pas de pose P₄₂₁ des éléments de renforcement circonférentiels 5 des parties axialement extérieures 421 est identique à celui de la figure 1 et égal à 2.3 mm.

Les éléments de renforcement circonférentiels coupés et formant des tronçons 6 dans la partie centrale sont posés avec un pas P₄₂₂ égal à 2.9 mm. Ce pas de pose plus important dans la partie centrale contribue à diminuer la rigidité circonférentielle de ladite partie centrale 422 par rapport aux parties axialement extérieures 421.

Le pas de pose des éléments de renforcement circonférentiels coupés et formant des tronçons 8 dans les zones intermédiaires 423 est égal à 2.5 mm. Le pas de pose de ces zones intermédiaires 423 est à une valeur intermédiaire entre ceux des parties axialement extérieures 421 et celui de la partie centrale 422. Ces valeurs contribuent à la progressivité de la variation de la rigidité circonférentielle selon la direction axiale de la couche d'éléments de renforcement circonférentiels 42.

Selon d'autres variantes de réalisation de l'invention, le pas dans les zones intermédiaires 423 pourrait être à une valeur identique à celle du pas de la partie centrale ou bien à celle du pas de la des parties axialement extérieures, seul les longueurs des tronçons et longueurs des intervalles entre tronçons évoluant progressivement.

D'autres variantes encore, peuvent prévoir une évolution progressive du pas dans les zones intermédiaires associée soit à des éléments de renforcement circonférentiels continus comme dans les parties axialement extérieures 421 soit des éléments de renforcement coupés avec des longueurs de tronçons et d'intervalles entre tronçons identiques à celles de la partie centrale 422.

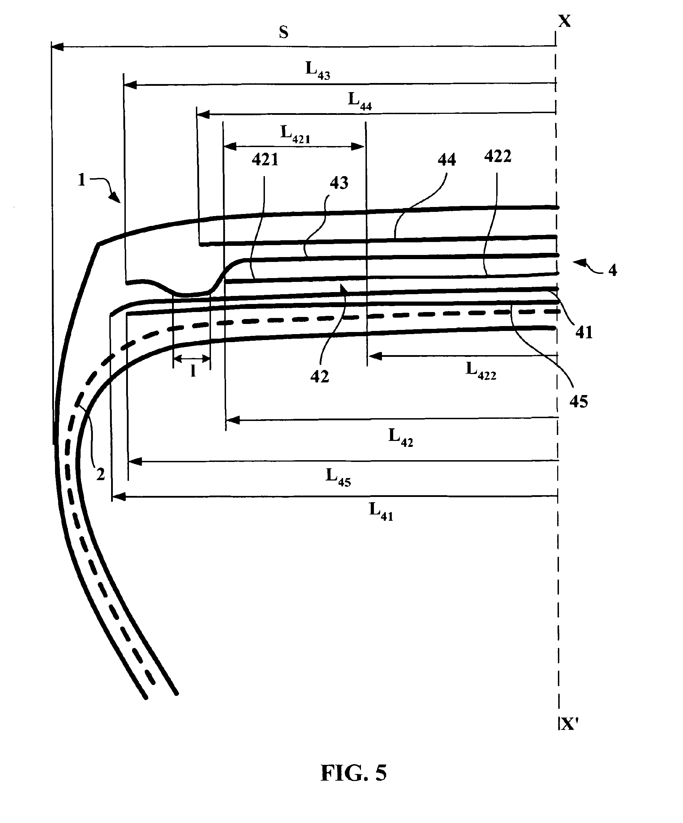

Sur la figure 5, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale 1 : les câbles de la première couche de travail 41 et les câbles de la deuxième couche de travail 43, sur la largeur axiale de couplage 1 des deux couches, sont séparés radialement entre eux par une couche de gomme, dont l'épaisseur est minimale et correspond au double de l'épaisseur de la couche caoutchouteuse de calandrage des câbles métalliques 11.35 non frettés dont est formée chaque couche de travail 41, 43, soit 0,8 mm. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axiale de la zone de couplage à l'extrémité de la couche de travail la moins large. Ledit profilé a avantageusement une largeur suffisante pour recouvrir radialement l'extrémité de la couche de travail 41 la plus large, qui est, dans ce cas la couche de travail radialement la plus proche de l'armature de carcasse.

Des essais ont été réalisés avec le pneumatique réalisé selon l'invention conformément à la représentation de la figure 1 et comparés avec un pneumatique de référence identique mais réalisé selon une configuration usuelle.

Ce pneumatique de référence comporte une couche d'éléments de renforcements circonférentiels constituée du même câble, posé avec le même pas et ne comportant aucune partie avec des éléments coupés pour former des tronçons. La rigidité circonférentielle de la couche d'éléments de renforcement est ainsi homogène sur toute sa largeur axiale.

Des premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Les véhicules sont associés à une charge par pneumatique de 4000 Kg.

D'autres essais d'endurance ont été réalisés sur une machine de tests imposant une charge aux pneumatiques et un angle de dérive. Les essais ont été réalisés pour les pneumatiques selon l'invention avec une charge et un angle de dérive identiques à ceux appliqués aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance que les pneumatiques de référence.

Enfin d'autres essais de roulage ont été effectués sur des sols non bitumés présentant des reliefs simulant la présence de cailloux particulièrement agressifs pour les bandes de roulement des pneumatiques.

Ces derniers essais ont montré qu'après des distances parcourues identiques les pneumatiques selon l'invention présentent des altérations moins sévères.

L'invention telle qu'elle vient d'être décrite notamment en référence aux exemples de réalisation ne doit pas être comprise comme étant limitée à ces exemples. Bien que restant dans le champ d'application de l'invention, la couche d'éléments de renforcement circonférentiels peut par exemple être constituée de plus de cinq parties pour présenter des variations de rigidité circonférentielle encore plus progressive.

## Revendications

1. Pneumatique (1) à armature de carcasse radiale (2) comprenant une armature de sommet (4) formée d'au moins deux couches de sommet de travail (41, 43) d'éléments de renforcement inextensibles, lesdits câbles présentant sous une force de traction égale à 10% de la force de rupture un allongement relatif au plus égal à 0,2%, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche (42) d'éléments de renforcement métalliques circonférentiels, **caractérisé en ce que** la couche (42) d'éléments de renforcement circonférentiels est constituée d'au moins une partie centrale (422) et deux parties axialement extérieures (421), **en ce que** les éléments de renforcement de la partie centrale (422) d'au moins une couche (42) d'éléments de renforcement circonférentiels sont des éléments de renforcement coupés de manière à former des tronçons (6), **en ce que** la longueur (1) des tronçons (6) est inférieure à 550 mm, **en ce que** la distance (d) entre les extrémités de deux tronçons (6) consécutifs est supérieure à 25 mm, **en ce que** la longueur (1) des tronçons (6) est comprise entre 1.1 et 13 fois la distance (d) entre les extrémités de deux tronçons consécutifs et **en ce que** les éléments de renforcement (5) des deux parties axialement extérieures (421) sont continus.

2. Pneumatique (1) selon la revendication 1, **caractérisé en ce que** la longueur (1) des tronçons (6) est inférieure à 300 mm et **en ce que** la longueur (1) des tronçons (6) est inférieure à 6.5 fois la distance (d) entre les extrémités de deux tronçons consécutifs.

3. Pneumatique (1) selon la revendication 1 ou 2, **caractérisé en ce que** la longueur (1) des tronçons (6) est supérieure à 95 mm.

4. Pneumatique (1) selon l'une des revendications 1 à 3, **caractérisé en ce que** la distance (d) entre les extrémités de deux tronçons (6) consécutifs est inférieure à 175 mm.

5. Pneumatique (1) selon l'une des revendications précédentes, S étant la largeur maximale axiale du pneumatique, lorsque ce dernier est monté sur sa jante de service et gonflé à sa pression recommandée, **caractérisé en ce que** la largeur axiale (L₄₂₂) de la partie centrale (422) de la couche (42) d'éléments de renforcement circonférentiels est supérieure à 0.15xS et inférieur à 0.5xS.

6. Pneumatique (1) selon l'une des revendications précédentes, S étant la largeur maximale axiale du pneumatique, lorsque ce dernier est monté sur sa jante de service et gonflé à sa pression recommandée, **caractérisé en ce que** la largeur axiale (L₄₂₁) de chacune des parties axialement extérieures (421) de la couche (42) d'éléments de renforcement circonférentiels est inférieure à 0.45xS.

7. Pneumatique (1) selon l'une des revendications précédentes, **caractérisé en ce que** la couche (42) d'éléments de renforcement circonférentiels comporte des zones de transition (423) entre la partie centrale (422) et les parties axialement extérieures (421), **en ce que** lesdites zones de transition (423) comportent au plus un élément de renforcement métallique et **en ce que** la largeur (L₄₂₃), mesurée selon la direction axiale, desdites zones de transition est au moins égale à 1.5 mm.

8. Pneumatique (1) selon l'une des revendications précédentes, **caractérisé en ce que** la couche (42) d'éléments de renforcement circonférentiels comporte des zones de transition (423) entre la partie centrale (422) et les parties axialement extérieures (421), **en ce que** la longueur circonférentielle (l₄₂₃) des tronçons (8) diminue depuis le bord axialement extérieur d'une zone de transition (423) vers son bord axialement intérieur et/ou **en ce que** la distance (d₄₂₃) entre les extrémités de deux tronçons (8) consécutifs augmente depuis le bord axialement extérieur d'une zone de transition vers son bord axialement intérieur.

9. Pneumatique (1) selon l'une des revendications précédentes, **caractérisé en ce que la** couche (42) d'éléments de renforcement circonférentiels comporte des zones de transition (423) entre la partie centrale (422) et les parties axialement extérieures (423), **en ce que** les éléments de renforcement circonférentiels présentent un pas (P₄₂₂) dans la partie centrale (422) supérieur au pas (P₄₂₁) dans les parties axialement extérieures (421) et **en ce que** le pas (P₄₂₃) dans la zone de transition (423) est à une valeur comprise entre celle des parties axialement extérieures (421) et celle de la partie centrale (422).

10. Pneumatique (1) selon l'une des revendications précédentes, **caractérisé en ce que** deux éléments de renforcement circonférentiels consécutifs, ou axialement adjacents, constituées d'éléments de renforcement coupés formant des tronçons (6), ne présentent pas de zones de coupures axialement en regard l'une de l'autre.

11. Pneumatique (1) selon la revendication 10, **caractérisé en ce que,** les extrémités de deux tronçons (6) adjacents sont séparées l'une de l'autre selon la direction longitudinale d'une distance supérieure à 0.1 fois la longueur (1) du tronçon (6) dont la longueur mesurée selon la direction longitudinale est la plus petite.

12. Pneumatique (1) selon l'une des revendications précédentes, **caractérisé en ce que** la couche (42) d'éléments de renforcement circonférentiels est radialement disposée entre deux couches de sommet de travail (41, 43).

13. Pneumatique (1) selon l'une des revendications précédentes, **caractérisé en ce que** les éléments de renforcement des deux parties axialement extérieures (421) d'au moins une couche (42) d'éléments de renforcement circonférentiels sont des éléments de renforcement métalliques présentant un module sécant à 0,7 % d'allongement compris entre 10 et 120 GPa et un module tangent maximum inférieur à 150 GPa.

14. Pneumatique (1) selon l'une des revendications précédentes, **caractérisé en ce que** les éléments de renforcement d'au moins une couche (42) d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

15. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

16. Pneumatique (1) selon l'une des revendications précédentes, **caractérisé en ce que** l'armature de sommet (4) comporte en outre une couche de triangulation (45) formée d'éléments de renforcement métalliques faisant avec la direction circonférentielle des angles supérieurs à 45°.

## Patentansprüche

1. Luftreifen (1) mit radialer Karkassenarmierung (2), umfassend eine Oberseitenarmierung (4), die aus mindestens zwei Arbeitsoberseitenlagen (41, 43) aus nicht ausdehnbaren Verstärkungselementen gebildet ist, wobei die Kabel bei einer Zugkraft gleich 10 % der Reißkraft eine relative Dehnung von höchstens 0,2 % aufweisen und sich von einer Lage zur anderen kreuzen und mit der Umfangsrichtung Winkel bilden, die zwischen 10° und 45° liegen, die wiederum radial mit einer Lauffläche bedeckt ist, wobei die Lauffläche über zwei Flanken mit zwei Wülsten verbunden ist, wobei die Oberseitenarmierung mindestens eine Lage (42) aus umfangsmäßigen metallischen Verstärkungselementen umfasst, **dadurch gekennzeichnet, dass** die Lage (42) aus umfangsmäßigen Verstärkungselementen mindestens aus einem mittleren Teil (422) und zwei axial äußeren Teilen (421) besteht, dass die Verstärkungselemente des mittleren Teils (422) mindestens einer Lage (42) aus umfangsmäßigen Verstärkungselementen Verstärkungselemente sind, die derart zugeschnitten sind, dass sie Teilstücke (6) bilden, dass die Länge (1) der Teilstücke (6) kleiner als 550 mm ist, dass der Abstand (d) zwischen den Enden von zwei aufeinanderfolgenden Teilstücken (6) größer als 25 mm ist, dass die Länge (1) der Teilstücke (6) zwischen 1,1 und 13mal der Abstand (d) zwischen den Enden von zwei aufeinanderfolgenden Teilstücke (6) ist, und dass die Verstärkungselemente (5) der beiden axial äußeren Teile (421) durchgehend sind.

2. Luftreifen (1) nach Anspruch 1, **dadurch gekennzeichnet, dass** die Länge (1) der Teilstücke (6) kleiner als 300 mm ist und dass die Länge (1) der Teilstücke (6) kleiner als 6,5mal der Abstand (d) zwischen den Enden von zwei aufeinanderfolgenden Teilstücken ist.

3. Luftreifen (1) nach Anspruch 1 oder 2, **dadurch gekennzeichnet, dass** die Länge (1) der Teilstücke (6) größer als 95 mm ist.

4. Luftreifen (1) nach einem der Ansprüche 1 bis 3, **dadurch gekennzeichnet, dass** der Abstand (d) zwischen den Enden von zwei aufeinanderfolgenden Teilstücken (6) kleiner als 175 mm ist.

5. Luftreifen (1) nach einem der vorhergehenden Ansprüche, wobei S die größte axiale Breite des Luftreifens ist, wenn dieser auf seiner Betriebsfelge aufgezogen ist und auf seinen empfohlenen Druck aufgepumpt ist, **dadurch gekennzeichnet, dass** die axiale Breite (L₄₂₂) des mittleren Teils (422) der Lage (42) aus umfangsmäßigen Verstärkungselementen größer als 0,15xS und kleiner als 0,5xS ist.

6. Luftreifen (1) nach einem der vorhergehenden Ansprüche, wobei S die größte axiale Breite des Luftreifens ist, wenn dieser auf seiner Betriebsfelge aufgezogen ist und auf seinen empfohlenen Druck aufgepumpt ist, **dadurch gekennzeichnet, dass** die Axialbreite (L₄₂₁) jedes der axial äußeren Teile (421) der Lage (42) aus umfangsmäßigen Verstärkungselementen kleiner als 0,45xS ist.

7. Luftreifen (1) nach einem der vorhergehenden Ansprüche, **dadurch gekennzeichnet, dass** die Lage (42) aus umfangsmäßigen Verstärkungselementen Übergangszonen (423) zwischen dem mittleren Teil (422) und den axial äußeren Teilen (421) umfasst, dass die Übergangszonen (423) höchstens ein metallisches Verstärkungselement umfassen, und dass die in Axialrichtung gemessene Breite (L₄₂₃) der Übergangszonen mindestens gleich 1,5 mm ist.

8. Luftreifen (1) nach einem der vorhergehenden Ansprüche, **dadurch gekennzeichnet, dass** die Lage (42) aus umfangsmäßigen Verstärkungselementen Übergangszonen (423) zwischen dem mittleren Teil (422) und den axial äußeren Teilen (421) umfasst, dass die Umfangslänge (l₄₂₃) der Teilstücke (8) von dem axial äußeren Rand einer Übergangszone (423) zu ihrem axial inneren Rand abnimmt, und/oder dass der Abstand (d₄₂₃) zwischen den Enden von zwei aufeinanderfolgenden Teilstücken (8) vom axial äußeren Rand einer Übergangszone zu ihrem axial inneren Rand zunimmt.

9. Luftreifen (1) nach einem der vorhergehenden Ansprüche, **dadurch gekennzeichnet, dass** die Lage (42) aus umfangsmäßigen Verstärkungselementen Übergangszonen (423) zwischen dem mittleren Teil (422) und den axial äußeren Teilen (421) umfasst, dass die umfangsmäßigen Verstärkungselemente einen Zwischenraum (P₄₂₂) in dem mittleren Teil (422) aufweisen, der größer ist als der Zwischenraum (P₄₂₁) in den axial äußeren Teilen (421), und dass der Zwischenraum (P₄₂₃) in der Übergangszone (423) einen Wert aufweist, der zwischen dem der axial äußeren Teile (421) und dem des mittleren Teils (422) liegt.

10. Luftreifen (1) nach einem der vorhergehenden Ansprüche, **dadurch gekennzeichnet, dass** zwei aufeinanderfolgende umfangsmäßige oder axial angrenzende Verstärkungselemente, die aus zugeschnittenen Verstärkungselementen bestehen, die Teilstücke (6) bilden, axial einander gegenüber keine Schnittzonen aufweisen.

11. Luftreifen (1) nach Anspruch 10, **dadurch gekennzeichnet, dass** die Enden von zwei angrenzenden Teilstücken (6) in der Längsrichtung eines Abstands, der größer als 0,1mal die Länge (1) des Teilstücks (6) ist, dessen in Längsrichtung gemessene Länge am kleinsten ist, voneinander getrennt sind.

12. Luftreifen (1) nach einem der vorhergehenden Ansprüche, **dadurch gekennzeichnet, dass** die Lage (42) aus umfangsmäßigen Verstärkungselementen radial zwischen zwei Arbeitsoberseitenlagen (41, 43) angeordnet ist.

13. Luftreifen (1) nach einem der vorhergehenden Ansprüche, **dadurch gekennzeichnet, dass** die Verstärkungselemente der beiden axial äußeren Teile (421) mindestens einer Lage (42) aus umfangsmäßigen Verstärkungselementen metallische Verstärkungselemente sind, die bei einer Dehnung von 0,7 % ein Sekansmodul zwischen 10 und 120 GPa und ein maximales Tangensmodul von weniger als 150 GPa aufweisen.

14. Luftreifen (1) nach einem der vorhergehenden Ansprüche, **dadurch gekennzeichnet, dass** die Verstärkungselemente mindestens einer Lage (42) aus umfangsmäßigen Verstärkungselementen metallische Verstärkungselemente sind, die eine Zugbelastungskurve in Abhängigkeit von der relativen Dehnung aufweisen, die geringe Steigungen für die geringen Dehnungen und eine im Wesentlichen konstante und starke Steigung für die größeren Dehnungen aufweist.

15. Luftreifen (1) nach einem der vorhergehenden Ansprüche, **dadurch gekennzeichnet, dass** die Oberseitenarmierung (4) radial außen durch mindestens einen zusätzlichen, so genannten Schutzgürtel (44) aus so genannten elastischen Verstärkungselementen vervollständigt wird, die im Verhältnis zur Umfangsrichtung in einem Winkel zwischen 10° und 45° orientiert sind, und der die gleiche Richtung aufweist wie der Winkel, der durch die nicht ausdehnbaren Elemente des Arbeitsgürtels (43) gebildet wird, der daran radial angrenzend ist.

16. Luftreifen (1) nach einem der vorhergehenden Ansprüche, **dadurch gekennzeichnet, dass** die Oberseitenarmierung (4) ferner eine Triangulationslage (45) umfasst, die aus metallischen Verstärkungselementen gebildet wird, die mit der Umfangsrichtung Winkel von mehr als 45° bilden.

## Claims

1. Tyre (1) with radial carcass reinforcement (2) comprising a crown reinforcement (4) formed of at least two working crown layers (41, 43) of inextensible reinforcing elements, said cords exhibiting under a tensile force equal to 10% of the rupture force a strain of at most 0.2%, crossed from one layer to the other and making angles of between 10° and 45° with the circumferential direction, and itself radially capped by a tread, the said tread being connected to two beads by two sidewalls, the crown reinforcement comprising at least one layer (42) of circumferential metal reinforcing elements, **characterized in that** the layer (42) of circumferential reinforcing elements consists of at least one central part (422) and two axially outer parts (421), **in that** the reinforcing elements of the central part (422) of at least one layer (42) of circumferential reinforcing elements are reinforcing elements that are cut into sections (6), **in that** the length (1) of the sections (6) is less than 550 mm, **in that** the distance (d) between the ends of two consecutive sections (6) is greater than 25 mm, **in that** the length (1) of the sections (6) is between 1.1 and 13 times the distance (d) between the ends of two consecutive sections (6), and **in that** the reinforcing elements (5) of the two axially outer parts (421) are continuous.

2. Tyre (1) according to Claim 1, **characterized in that** the length (1) of the sections (6) is less than 300 mm, and **in that** the length (1) of the sections (6) is less than 6.5 times the distance (d) between the ends of two consecutive sections.

3. Tyre (1) according to Claim 1 or 2, **characterized in that** the length (1) of the sections (6) is greater than 95 mm.

4. Tyre (1) according to one of Claims 1 to 3, **characterized in that** the distance (d) between the ends of two consecutive sections (6) is less than 175 mm.

5. Tyre (1) according to one of the preceding claims, S being the maximum axial width of the tyre when this tyre is mounted on its service rim and inflated to its recommended pressure, **characterized in that** the axial width (L₄₂₂) of the central part (422) of the layer (42) of circumferential reinforcing elements is greater than 0.15xS and less than 0.5xS.

6. Tyre (1) according to one of the preceding claims, S being the maximum axial width of the tyre when this tyre is mounted on its service rim and inflated to its recommended pressure, **characterized in that** the axial width (L₄₂₁) of each of the axially outer parts (421) of the layer (42) of circumferential reinforcing elements is less than 0.45xS.

7. Tyre (1) according to one of the preceding claims, **characterized in that** the layer (42) of circumferential reinforcing elements comprises regions of transition (423) between the central part (422) and the axially outer parts (421), **in that** the said transition regions (423) comprise at most a metal reinforcing element and **in that** the width (L₄₂₃), measured in the axial direction, of the said transition regions is at least equal to 1.5 mm.

8. Tyre (1) according to one of the preceding claims, **characterized in that** the layer (42) of circumferential reinforcing elements comprises regions of transition (423) between the central part (422) and the axially outer parts (421), **in that** the circumferential length (l₄₂₃) of the sections (8) decreases from the axially outer edge of a transition region (423) towards the axially inner edge thereof and/or **in that** the distance (d₄₂₃) between the ends of two consecutive sections (8) increases from the axially outer edge of a transition region towards the axially inner edge thereof.

9. Tyre (1) according to one of the preceding claims, **characterized in that** the layer (42) of circumferential reinforcing elements comprises regions of transition (423) between the central part (422) and the axially outer parts (421), **in that** the circumferential reinforcing elements have a spacing (P₄₂₂) in the central part (422) that is greater than the spacing (P₄₂₁) in the axially outer parts (421) and **in that** the spacing (P₄₂₃) in the transition region (423) is of a value comprised between that of the axially outer parts (421) and that of the central part (422).

10. Tyre (1) according to one of the preceding claims, **characterized in that** two consecutive, or axially adjacent, circumferential reinforcing elements, which consist of reinforcing elements that are cut to form sections (6), do not have regions of cutting that axially face one another.

11. Tyre (1) according to Claim 10, **characterized in that** the ends of two adjacent sections (6) are separated from one another in the longitudinal direction by a distance greater than 0.1 times the length (1) of that section (6) which has the shortest length measured in the longitudinal direction.

12. Tyre (1) according to one of the preceding claims, **characterized in that** the layer (42) of circumferential reinforcing elements is arranged radially between two working crown layers (41,43).

13. Tyre (1) according to one of the preceding claims, **characterized in that** the reinforcing elements of the two axially outer parts (421) of at least one layer (42) of circumferential reinforcing elements are metal reinforcing elements having a secant modulus of 0.7% elongation of between 10 and 120 GPa and a maximum tangent modulus of less than 150 GPa.

14. Tyre (1) according to one of the preceding claims, **characterized in that** the reinforcing elements of at least one layer (42) of circumferential reinforcing elements are metal reinforcing elements having a tensile stress-strain curve that exhibits shallow gradients for small elongations and a substantially constant and steep gradient for greater elongations.

15. Tyre (1) according to one of the preceding claims, **characterized in that** the crown reinforcement (4) is supplemented radially on the outside by at least one additional ply (44), known as a protective ply, of reinforcing elements said to be elastic reinforcing elements, which are directed with respect to the circumferential direction at an angle of between 10° and 45° and in the same direction as the angle formed by the inextensible elements of the working ply (43) radially adjacent to it.

16. Tyre (1) according to one of the preceding claims, **characterized in that** the crown reinforcement (4) further comprises a triangulation layer (45) formed of metal reinforcing elements that make angles greater than 45° with the circumferential direction.
